# EUROPEAN PATENT SPECIFICATION

(11) **EP 2 860 892 B1**
(45) Date of publication and mention of the grant of the patent: **01.04.2020**
(21) Application number: 13188058.5
(22) Date of filing: 10.10.2013
(51) Int. Cl.: H04K 3/00, H04W 8/26, H04W 12/02, H04L 29/06

(54) **Method and apparatuses for identifying a mobile device in wireless networks**
Verfahren und Vorrichtungen zur Identifizierung einer mobilen Vorrichtung in drahtlosen Netzwerken
Procédé et dispositifs pour l'identification d'un dispositif mobile dans des réseaux sans fil

(43) Date of publication of application: 15.04.2015
(73) Proprietor: EXFO Oy, 90590 Oulu (FI)
(72) Inventor: Kemppainen, Jukka, 90590 Oulu (FI); Niiranen, Taisto, 90590 Oulu (FI)
(74) Representative: Kolster Oy Ab

(56) References cited:
- WO-A1-2009/128060
- CA-A1- 2 645 313
- 3rd Generation Partnership Project: "3rd Generation Partnership Project; Technical Specification Group Core Network and Terminals; Non-Access-Stratum (NAS) protocol for Evolved Packet System (EPS); Stage 3 (Release 12)", , 1 September 2013 (2013-09-01), pages 1,2,40-43, XP055506436, Sophia Antipolis Valbonne - FRANCE Retrieved from the Internet: URL:https://portal.3gpp.org/desktopmodules /Specifications/SpecificationDetails.aspx? specificationId=1072 [retrieved on 2018-09-12]

## Description

### TECHNICAL FIELD

The invention relates generally to identifying a subscriber entity of a wireless network and specifically to an apparatus, a method, and a computer-readable medium used for performing the identification.

### BACKGROUND

It is advantageous for authorities, for example, to identify mobile devices using wireless connectivity to one or more wireless networks.

CA 2 645 313 discloses a process for identification of a mobile user end device in a digital cellular mobile radio network, through which data are transmitted according to a first protocol, comprising the following steps executed within the range of the first protocol: - a simulator is arranged in close proximity to the to be identified user end device; - from a measurement system the relevant parameters for data transmissions are determined by mobile radio network base stations in close proximity to the simulator and transferred to the simulator; - subject to the determined parameters, the simulator is operated as a new base station; - the to be identified user end device recognizes the simulator as a new base station and registers itself there, at which point - an authorization procedure is started in which the to be identified user end device rejects the authentication procedure as erroneous, the simulator starts the identification procedure during which the simulator requests the to be identified user end device for its identification parameters and the simulator receives the identification parameters of the to be identified user end device; and - the user end device is identified within the range of the first protocol on the basis of the transmitted identification parameter.

WO 2009/128060 discloses a method for performing access control of entities with identification information to a predetermined passing zone. Accordingly, stimulating signals are transmitted from a transceiver that emulates a unique cellular base station of a legitimate local cellular network to one or more mobile devices that are linked to the entities and are in the vicinity of that zone. The mobile devices that are connected to a conventional cellular network are driven to try registering to the unique base station, by transmitting response signals representing their cellular IDs, to the transceiver, which receives them and forwards them to a control device, connected to the transceiver, for extracting the cellular IDs using an appropriate software application. Then the transceiver may transmit rejecting signals to the mobile devices that tried to register to the unique base station and releases them to return to the conventional cellular network, in a way that is transparent to the cell-phone's user, and/or may send them a cellular message as described above, at the discretion of the operator of the unique base station.

The document 3rd Generation Partnership Project: "3rd Generation Partnership Project; Technical Specification Group Core Network and Terminals; Non-Access-Stratum (NAS) protocol for Evolved Packet System (EPS); Stage 3 (Release 12)", 1 September 2013 (2013-09-01), pages 1, 2, 40-43, Sophia Antipolis Valbonne - FRANCE discloses integrity checking of NAS signalling messages in the MME.

### BRIEF DESCRIPTION

The invention is defined by the independent claims.

Embodiments are defined in the dependent claims.

### BRIEF DESCRIPTION OF THE DRAWINGS

In the following the invention will be described in greater detail by means of preferred embodiments with reference to the attached [accompanying] drawings, in which
Figure 1 illustrates a structure of an emulating system according to an embodiment of the invention;
Figure 2 illustrates a structure of an apparatus according to an embodiment of the invention;
Figure 3 illustrates a detailed structure of an apparatus according to an embodiment of the invention;
Figure 4 is a flow diagram of a process for capturing identifiers of subscriber entities by the apparatus according to an embodiment of the invention;
Figure 5 illustrates an embodiment for detecting swap of a mobile device according to an embodiment of the invention;
Figure 6 illustrates a signalling diagram for causing a subscriber entity to switch to another cell for transfer of identifiers according to an embodiment of the invention; and
Figure 7 is a flow diagram of a process for evaluating reliability of received identifiers according to an embodiment of the invention.

### DETAILED DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

It should be noted that while Figures illustrate various embodiments of apparatuses, they are simplified block diagrams that only show some structures and functional entities. The connections shown in these Figures are logical connections; the actual physical connections may be different. Interfaces between the various elements may be implemented with suitable interface technologies, such as a message interface, a method interface, a sub-routine call interface, a block interface, or any hardware/software means enabling communication between functional sub-units. It is apparent to a person skilled in the art that the described apparatuses may also comprise other functions and structures. It should be appreciated that details of some functions, structures, and the protocols used for communication are irrelevant to the actual invention. Therefore, they need not be discussed in more detail here.

Embodiments of the invention relate to Long Term Evolution (LTE) standardized within the Third Generation Partnership Project (3GPP), and more information on the LTE can be found in the 3GPP specifications. Some embodiments relate to non-LTE specifications such as second and third generation cellular communication systems. Such systems comprise Global System for Mobile Communications (GSM) and Universal Mobile Telecommunication system with its evolution versions such as High-Speed Packet Access (HSPA). More information on those standards can be found in corresponding 3GPP and European Telecommunication Standards Institute (ETSI) specifications.

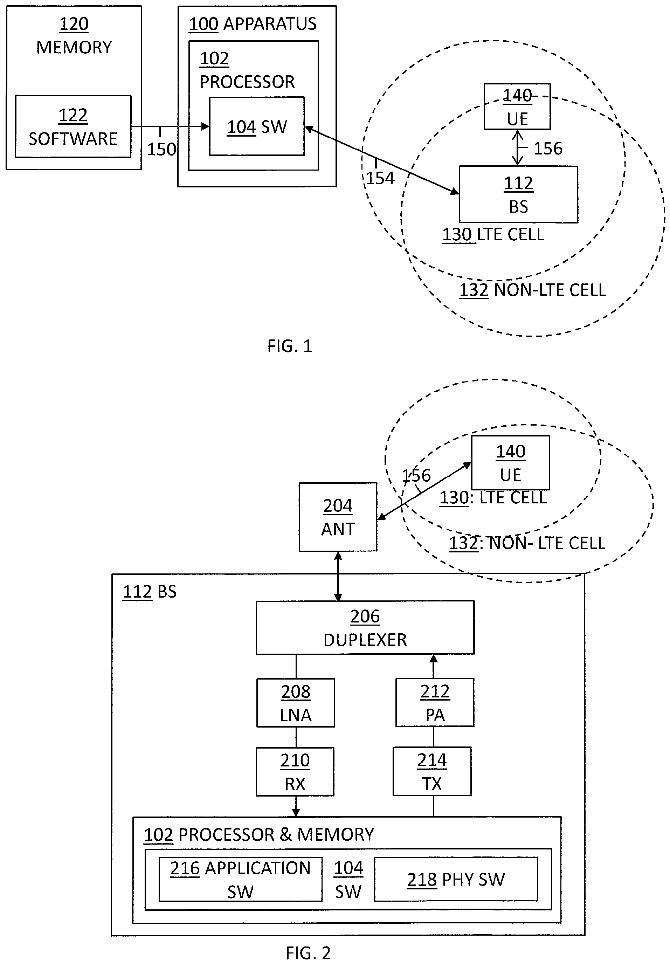

Figure 1 illustrates an example embodiment of an apparatus 100. The apparatus 100 may be any electronic apparatus capable of processing data as described in the following. A non-exhaustive list of the types of the apparatus 100 includes: an electronic digital computer, a desktop computer, a portable computer, a laptop computer, a tablet computer, a smartphone, a mobile phone, or any other electronic apparatus. The apparatus 100 may employ an operating system such as Android, Microsoft Windows, Microsoft Windows Phone, Apple iOS, Apple Mac OS X, Linux, or Symbian, for example. Besides being a single apparatus 100, the apparatus 100 may be implemented in a distributed fashion employing communicatively coupled sub-units.

The apparatus 100 comprises one or more processors 102 and one or more memories 120 including computer program code 122. The processor 102 and the memory 120 may be implemented by electronic circuitry.

The term 'processor' 102 refers to a physical device that is capable of processing data in a computer or other digital electronic device. Depending on the processing power needed, the apparatus 100 may comprise several processors 102 such as parallel processors or one or more multicore processors. A non-exhaustive list of implementation techniques for the processor 102 includes, but is not limited to: logic components, standard integrated circuits, application-specific integrated circuits (ASIC), system-on-a-chip (SoC), application-specific standard products (ASSP), microprocessors, digital signal processors, special-purpose computer chips, and field-programmable gate arrays (FPGA).

The term 'memory' 120 refers to a physical device that is capable of storing the computer program code 122 and data on a temporary or permanent basis for use in a computer or other digital electronic device. In an example embodiment, the term 'memory' refers to working memory (also known as primary storage, main memory or internal storage) directly accessible to the processor. In an example embodiment, the working memory may be implemented as a random-access memory (RAM), such as a dynamic RAM, DRAM.

The one or more memories 120 and the computer program code 122 are configured to, with the one or more processors 102, cause the apparatus 100 to execute at least some of the embodiments described below. The processor 102 may, upon reading the computer program code 102 from the memory 120, execute computer program instructions 104 comprised in the computer program code and carry out a computer process defined by the program instructions 104. In an embodiment, the computer process comprises processing international mobile subscriber identifiers (IMSI) and international mobile equipment identifiers (IMEI) of subscriber entities supporting the LTE and the non-LTE communications.

In an example embodiment, the apparatus 100 may be of the type utilized in telecommunication testing and measurement. The apparatus 100 may be a measuring device. The apparatus 100 may be for instance a protocol simulator used for testing the operation of a data transmission system. The apparatus 100 may also be a computer provided with for instance Microsoft Windows® or some other operating system and dedicated protocol simulator software. The apparatus 100 may further comprise a number of other devices, such as a user interface and communication equipment. The user interface allows controlling the operations of the apparatus 100 and monitoring the operations carried out by the apparatus 100.

In an example embodiment, the apparatus 100 is utilized to identify a mobile subscriber entity 140 comprising a mobile device carried by a user or a mobile device being fixed to a vehicle. Consequently, the apparatus 100 may also be mobile, e.g. being carried by a person following the user of the mobile device or being fixed to a vehicle following the user of the mobile device and/or the vehicle of the user.

The subscriber entity 140 may be understood as comprising a subscriber identity module (SIM) and a mobile device such as a cellular phone, a tablet computer, or a laptop computer. The mobile device comprises the hardware and software for executing applications and connecting to base stations of cellular communication networks according to the LTE and/or non-LTE specifications, while the SIM may be used to identify and authenticate subscribers on mobile telephony devices and services. The mobile device may comprise a radio terminal, a subscriber terminal, smartphone, mobile station, mobile phone, portable computer, pad computer, laptop, tablet, or some other type of wireless mobile communication device The mobile device may be a piece of equipment or a device that is configured to associate its user with a subscription and allows the user to interact with the radio system, e.g. the subscriber entity 140 is capable of requesting a service from the radio system. The subscriber entity 140 presents information to the user and allows the user to input information. In other words, the subscriber entity 140 may be any terminal capable of wirelessly receiving information from and/or wirelessly transmitting information to the radio system. Besides communication capabilities, the subscriber entity 140 may include computer functionalities or functionalities of other data processing devices.

The term 'base station' 112 refers to a Node B, enhanced or evolved NodeB (eNB), a home eNode B (HeNB), an access point (AP), an IEEE 802.11 based access point, a femto node, a femto base station, or any other equipment belonging to a network infrastructure of a radio system and implementing a radio communication interface 156 with the subscriber entity 140.

In an example embodiment of the LTE, real LTE cells form a radio coverage. 'Real' refers to the fact that the cellular radio system implementing the real LTE cells is authorized by the authorities and it provides continuous service for the users of the subscriber entities 140. The apparatus 100 may be configured to establish an emulated LTE cell 130 overlaid with the real LTE cells. The apparatus 100 may configure a base station 112, through a communication interface 154, to establish the emulated LTE cell 130. In this context, 'emulated' refers to the fact that the emulated cell 130 is not a real authorized cell, but a fake cell that does not provide real service. The emulated LTE cell 130 may, however, duplicate or emulate at least a part of the functions of the real cell, so that the emulated behaviour of the emulated cell 130 closely resembles the behaviour of the real cell (as opposed to a computer simulation of an abstract model of the cell). In fact, the emulated cell 130 resembles the real cell to such a degree that the subscriber entity 140 considers it a real LTE cell. A communication range of the emulated LTE cell 130 may be smaller than the range of a regular real macro LTE cell. The apparatus 100 may employ an emulator base station or even a real base station apparatus 112 to establish the emulated LTE cell 130. The real base station apparatus 112 may be structurally and operationally identical or substantially identical to real base stations of the radio system with the exception that the base station apparatus 112 is not connected to a network infrastructure of the radio system. The apparatus 100 together with the base station 112 may thus form an emulating system configured to establish at least one emulated cell.

In an example embodiment of the LTE, each LTE cell may be provided with a physical cell identifier (PCI). The apparatus may be configured to scan for the PCIs of the neighbouring LTE cells and select a PCI for the emulated LTE cell 130 that is unused by the detected real LTE cells. In an embodiment, the apparatus may select a PCI which is not among those listed in blacklist ranges in system information block (SIB) 4 or 5 received from the real base stations.

The above-described scenario applies to the other cellular communication systems in a straightforward manner. In an embodiment, the apparatus 100 is configured to form an emulated LTE cell 130 and an emulated non-LTE cell 132. In such embodiments, the apparatus may employ or comprise a plurality of base stations 112 with each dedicated to a single cellular communication technology, e.g. an LTE base station and a non-LTE base station, or the apparatus may employ or comprise a single base station 112 configured to form the emulated LTE cell and the emulated non-LTE cell (as shown in Figure 1).

The purpose of creating the emulated cell 130, 132 may be to attract real subscriber entities 140 to communicate with the base station 112 of the emulated cell 130, 132. During the communication, the apparatus 100 may acquire information on the subscriber entities 140, e.g. the IMSI and/or IMEI. The reason for capturing the IMSI and/or IMEI may be, for example, capturing and/or tracking criminal or suspicious persons, testing, or gathering statistics. In order to improve the probability of the subscriber entities 140 communicating with the base station 112 of the emulated cell 130, 132, the base station may use transmission parameters that are attractive for the subscriber entities. Typically, a subscriber entity connects to a cell providing the best communication link, and the quality of the communication link may be determined by measuring received signal strength. The base station 112 may thus use a transmission power, directional beamforming, and/or similar parameters that cause the subscriber entities 140 to see the emulated cell as attractive.

In an example embodiment, the one or more memories 102 and the computer program code 104 are further configured to, with the one or more processors 102, cause the apparatus 100 further to perform: employ a measurement transceiver to measure radio frequency power levels of the real neighbouring LTE cells and select radio frequency transmission power of the emulated cell 130, 132 on the basis of the measured radio frequency power levels of the real neighbouring LTE cells. The transmission power of the base station 112 may then be adjusted 154 such that the radio frequency power level of the emulated cell 130, 132 is higher than the radio frequency power levels of the real neighbouring cells within the emulated cell 130, 132 or within an area where the apparatus determines to attract the subscriber entities 140. As the operator of the apparatus 100 is preferably within an observation distance to the user of the subscriber entity 140, the measured radio frequency power levels of the real neighbouring cells may reflect the reception power levels in the subscriber entity 140, and, consequently, also the subscriber entity 140 notices the emulated cell 130, 132 and may prefer the emulated cells 130, 132 over real cells.

In an example embodiment, the one or more memories 102 and the computer program code 104 are further configured to, with the one or more processors 102, cause the apparatus 100 further to perform: control the measurement transceiver to obtain network information of the real neighbouring LTE cells and select a tracking area code and a PCI for the emulated LTE cell 130 on the basis of the obtained network information of the real neighbouring LTE cells. A similar procedure may be carried out for the emulated non-LTE cell 132.

In an example embodiment, the one or more memories 102 and the computer program code 104 are further configured to, with the one or more processors 102, cause the apparatus 100 further to perform: control the measurement transceiver to obtain a blacklist of PCIs and select a PCI of the emulated LTE cell 130 such that the selected PCI is not in the blacklist. A similar procedure may be carried out for the emulated non-LTE cell 132.

As illustrated in Figure 2, the functionalities of the apparatus 100 and the base station 112 may be combined. The emulated base station 112 includes radio frequency components: a receiver 210, a transmitter 214, a duplexer 206, a low noise amplifier (LNA) 208 for the receiver 210, and a power amplifier (PA) 212 for the transmitter 214.

The base station 112 also includes the one or more processors 102 and the one or more memories 102.

As illustrated in Figure 2, the computer program code 104 may be implemented by suitable software. In an example embodiment, the computer program code 104 comprises application software 216 and physical layer software 218 as separate software entities communicating with each other. The application software 216 may control the physical layer software 218, implement the needed protocols above the physical layer, and implement an IMSI and/or IMEI catch function.

The base station 112 may be connected to an external antenna 204.

The subscriber entity 140 communicates 156 via a radio (or air) interface with the base station 112.

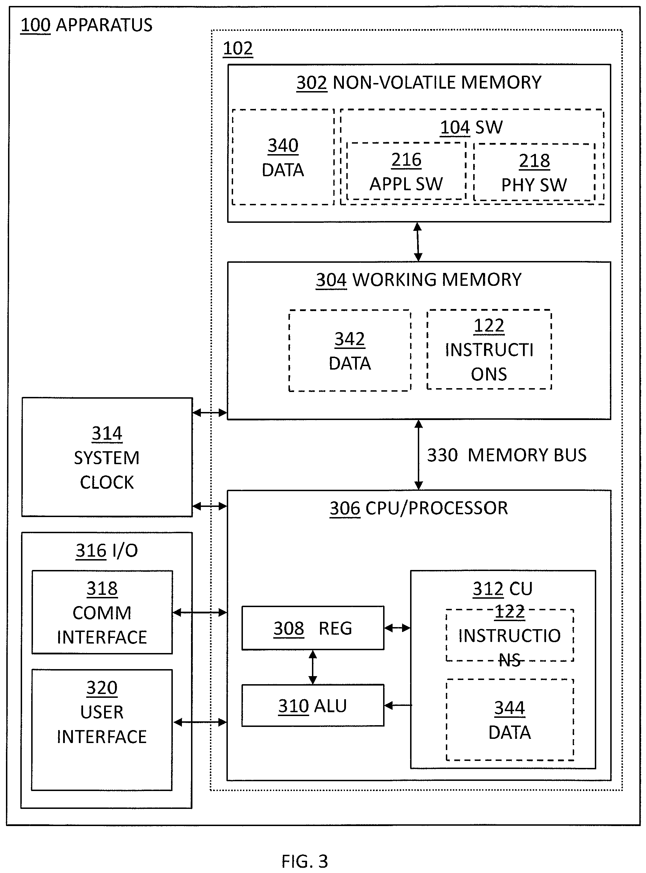

In an example embodiment illustrated in Figure 3, the apparatus 100 may be an electronic digital computer, which may comprise a non-volatile memory 302, a working memory 304, a processor 306, a system clock 314 and an input/output 316 including a communication interface 318 and a user interface 320. Naturally, the computer may comprise a number of other peripheral devices, not illustrated here for the sake of clarity.

In an example embodiment, the system clock 314 constantly generates a stream of electrical pulses, which cause the various transferring operations within the computer to take place in an orderly manner and with specific timing.

In an example embodiment, the processor 306 may be implemented as a microprocessor implementing functions of a central processing unit (CPU) on an integrated circuit. The CPU 306 is a logic machine executing a computer program 104, which comprises program instructions 120. The computer program 104 may be coded as a computer program using a programming language, which may be a high-level programming language, such as C, C++, or Java, or a low-level programming language, such as a machine language, or an assembler. There are many ways to structure the program 104. In an example embodiment, the operations of the program may be divided into functional modules, sub-routines, methods, classes, objects, applets, macros, etc., depending on the software design methodology and the programming language used. In modern programming environments, there are software libraries, i.e. compilations of ready-made functions, which may be utilized by the program for performing a wide variety of standard operations.

The CPU 306 may comprise a set of registers 308, an arithmetic logic unit (ALU) 310, and a control unit (CU) 312. The control unit 312 is controlled by a sequence of instructions 120 transferred to the CPU 306 from the working memory 304. The working memory 304 is directly or indirectly connected to the CPU 306 via a memory bus 330 including two buses: an address bus and a data bus. The CPU 306 sends a memory address indicating the desired location of data (= data 342 and instructions 120) number through the address bus, whereupon the CPU 306 reads or writes the data 342, 122, 344 from/to the working memory 304 using the data bus.

The control unit 312 may contain a number of microinstructions for basic operations. The implementation of the microinstructions may vary, depending on the CPU design. The microprocessor 306 may also have an operating system (such as general-purpose operating system, a dedicated operating system of an embedded system, or a real-time operating system), which may provide the computer program 104 with system services. During running of the program 104, the instructions 122 are transferred via the memory bus 330 from the working memory 304 into the control unit 312, wherein usually a portion of the instructions 122 resides and controls the operation.

In an example embodiment, the non-volatile memory 302 retains the stored information even when not powered. Examples of non-volatile memory include read-only memory (ROM), flash memory, magnetic computer storage devices such as hard disk drives, and optical discs. As is shown in Figure 3, the non-volatile memory 302 may store both data 340 (such as settings data, information on targeted subscriber terminals etc.) and the computer program 104 comprising the instructions 122.

An example embodiment, illustrated in Figure 1, provides a computer readable medium 120 comprising the set of the instructions 122, which, when executed on the apparatus 100 cause the apparatus 100 to perform the required operations. In an example embodiment, the instructions 122 may be in source code form, object code form, or in some intermediate form. The computer-readable medium 120 may be transitory or non-transitory, and it may comprise at least the following: any entity or device capable of carrying 150 the instructions 122 to the apparatus 100, a record medium, a computer memory, a read-only memory, an electrical carrier signal, a telecommunications signal, and a software distribution medium. In some jurisdictions, depending on the legislation and the patent practice, the medium 120 may not be the telecommunications signal. In an example embodiment, the medium 120 may be a non-transitory computer readable storage medium.

A problem in using an emulating system configured to establish only an emulated LTE cell is that, according to the LTE specifications, the subscriber entity 140 sends the IMEI in normal operation only when integrity protection is active. An example of abnormal operation is emergency calls where the IMEI may be transferred. A typical emulating system creating the emulated LTE cell is a stand-alone system with no connection to the real LTE network, thus, they cannot carry out the integrity protection. In other cellular systems such as the UMTS or GSM, a serving (emulated or real) cell may request the IMEI even if the integrity protection is not active.

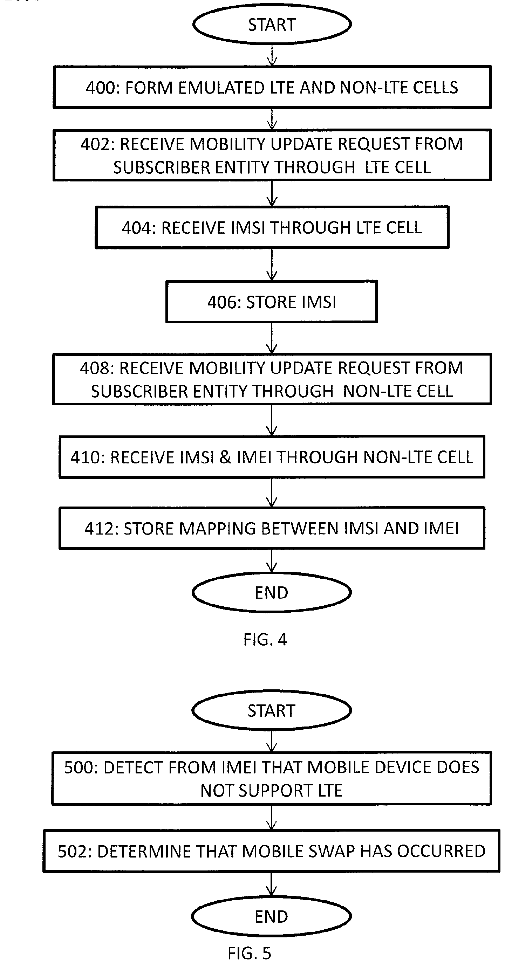

According to an embodiment of the invention, the apparatus 100 uses the LTE cell to capture the IMSI and a second emulated, non-LTE cell to capture the IMEI. Let us now describe an embodiment for capturing the IMSI and IMEI with reference to a flow diagram of Figure 4. Referring to Figure 4, the apparatus forms an LTE cell and an emulated non-LTE cell in block 400. In block 402, the apparatus 100 receives a first mobility update request message from a subscriber entity 140 through the emulated LTE cell 130. The first mobility update request message may be a part of an LTE mobility update procedure of the subscriber entity 140. In block 404, the apparatus receives the IMSI from the subscriber entity 140 during identity verification comprised in the LTE mobility update procedure. In block 406, the apparatus 100 stores the received IMSI in a database. In block 408, the apparatus receives a second mobility update request message from the subscriber entity, wherein the second mobility update request message is a part of a non-LTE mobility update procedure of the subscriber entity. The second mobility update request message may be received through the non-LTE cell. In block 410, the apparatus receives the IMSI and the IMEI from the subscriber entity during identity verification comprised in the non-LTE mobility update procedure. In block 412, the apparatus stores, on the basis of the IMSI received through the emulated LTE cell and the IMSI and IMEI received through the emulated non-LTE cell, mapping between the IMSI and the IMEI in the database.

The above-described procedure for receiving the IMSI through the emulated LTE cell and the IMSI and IMEI through the emulated non-LTE cell may be used for various purposes. In an embodiment, the process of Figure 4 is used to capture an IMEI of an LTE subscriber entity. In another embodiment, the process of Figure 4 is used to detect whether or not a mobile device swap has occurred.

In an embodiment, the apparatus 100 is configured to form a plurality of LTE cells and/or a plurality of non-LTE cells. The apparatus 100 may be connected to a plurality of base stations such as the base station 112 and configured the plurality of base stations to establish the plurality of emulated LTE and/or non-LTE cells. The use of the plurality of cells may improve the probability of attracting subscriber entities through expanded coverage area of the emulating system and/or provision of more emulated cells in a determined area.

In an embodiment, the first mobility update request message comprises a tracking area update request of the LTE.

In an embodiment, the one or more memories 102 and the computer program code 104 are further configured to, with the one or more processors 102, cause the apparatus 100 further to control 154 the base station 112 of the emulated LTE cell to request for the IMSI by transmitting an identity request to the subscriber entity 140, and to receive the IMSI in an identity response from the subscriber entity 140.

The subscriber entity 140 may also send other messages to the base station 112 instead of the mobility update request messages. Such messages may comprise an attach request, a service request, or an extended service request. Upon receiving such other messages in the base station of the emulated LTE cell, the base station 112 may request for the IMSI from the subscriber entity 140 and, thereafter, reject the received request and close the connection.

Figure 5 illustrates an embodiment of Figure 4 executed by the apparatus 100. The process of Figure 5 may be used to determine whether or not the user of the SIM has swapped the mobile device. The swapping may refer to the user swapping the SIM from one mobile device to another mobile device. Accordingly, the IMSI-IMEI combination is changed. In the embodiment of Figure 5, the memory 120 may store a database linking IMEIs of mobile devices with their capabilities. The GSM Association (GSMA) maintains such an IMEI database. When allocating IMEIs to a device manufacturer, the GSMA stores basic information about the mobile device associated with an IMEI. This information may include the manufacturer name and a model identifier of the associated mobile device and some of its technical capabilities (e.g. frequency bands supported by the handset, etc.). On the basis of the information contained in the database, the apparatus is able to determine whether or not a given mobile device having a unique IMEI supports the LTE.

Upon receiving the IMEI from the subscriber entity 140 in block 410, the apparatus 100 may execute the process of Figure 5. Referring to Figure 5, the apparatus may cross-reference the received IMEI with the database and retrieve the technical capabilities of the mobile device having the IMEI from the database. The apparatus may be configured to determine from the technical capabilities whether or not the mobile device supports the LTE. If the mobile device is determined as not supporting the LTE in block 510, the apparatus determines in block 502 that the user has swapped the mobile device between blocks 402 and 408 of Figure 4. The apparatus may then be configured to output a notification of the swapped mobile device through a user interface of the apparatus. On the other hand, if the mobile device is determined to support the LTE, the apparatus may determine that no mobile swap has occurred and that the subscriber entity has been the same in steps 402 to 406 and steps 408 to 412. As described above, the subscriber entity may be identified by the IMSI-IMEI combination.

The detection of the mobile device swap may be important when tracking a criminal or suspicious person, because it may help in profiling abnormal behavior. From a commercial perspective, it may be advantageous to determine how frequently people swap the SIMs and mobile devices.

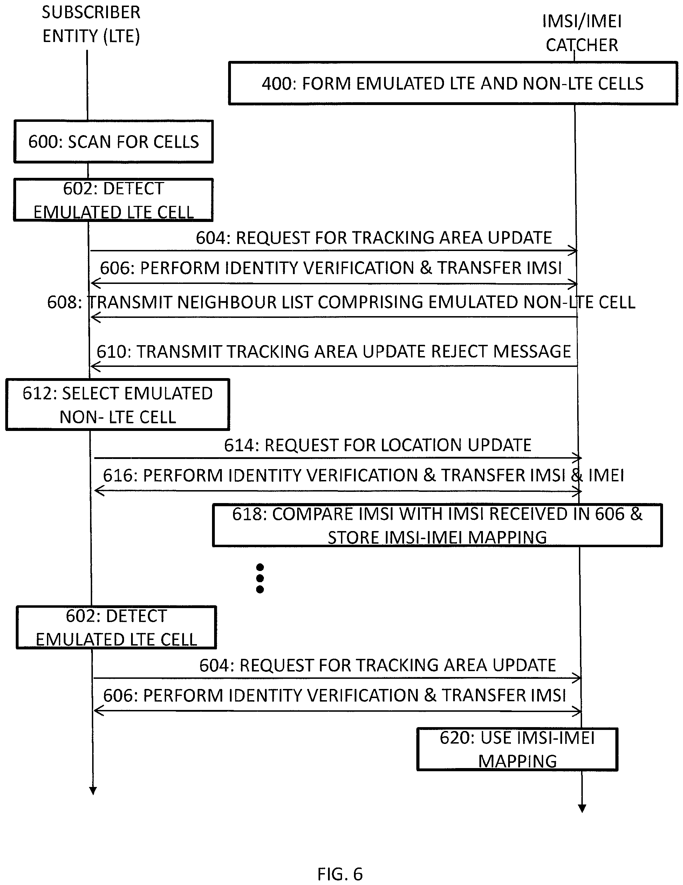

Figure 6 illustrates a signalling diagram of an embodiment of capturing the IMEI of a subscriber entity communicating with the emulated LTE cell. As described above, the transfer of the IMEI through the LTE cell may require the integrity protections which may not be available in the emulated LTE cell. Referring to Figure 6, the apparatus called IMSI/IMEI catcher in Figure 6 forms the emulated LTE cell and the emulated non-LTE cell in block 400.

In block 600, a subscriber entity supporting the LTE scans for a cell. As the subscriber entity supports the LTE, it may prefer LTE cells over the non-LTE cells. In block 602, the subscriber entity detects the emulated LTE cell. If the subscriber entity determines that the emulated LTE cell is attractive enough, e.g. it is determined to provide the best communication link, the subscriber entity may send the mobility update request message to the apparatus through the emulated LTE cell (step 604). The message may comprise a non-access stratum (NAS) tracking area update request message of the LTE specification. Upon receiving the request message in step 604, the apparatus may configure the base station of the emulated LTE cell to request for the IMSI of the subscriber entity. The IMSI may be requested and received in an identity verification procedure in step 606, wherein the base station may transmit an identity request message and the subscriber entity may send the IMSI in an identity response message of the LTE specification.

In step 608, the apparatus may configure the base station of the emulated LTE cell to transmit a neighbour list to the subscriber entity. The neighbour list may comprise a list of neighbouring cells. In an embodiment, the neighbour list comprises the emulated non-LTE cell. In an embodiment, the neighbour list consists of the emulated non-LTE cell. It should be appreciated that the neighbour list may be sent at any stage in the communication between the base station and the subscriber entity in the emulated LTE cell, e.g. before step 606 or 604.

Upon receiving the IMSI from the subscriber entity, the apparatus may store the IMSI in an IMSI-IMEI database. The apparatus may further store a note that the IMSI has been received through the LTE cell. The apparatus may store the IMSI in an IMSI record of the database and store in a corresponding IMEI record a note "not applicable", for example, thus indicating that the IMEI has not been received. The apparatus may then configure the base station of the emulated LTE cell to reject the request for the mobility update. The rejection may be signalled in the form of a NAS tracking area update reject message of the LTE specification. The NAS tracking area reject message may indicate a reason for the rejection, and the reason may be, for example, "no suitable cells in the tracking area".

Upon receiving the rejection in step 610, the subscriber entity may search for the next cell. The subscriber entity may be configured to start the search by employing the neighbour list received in step 608. As a consequence, the subscriber entity may prioritize the emulated non-LTE cell even over the real LTE cells because of this functionality of starting the search from the neighbour list. In block 612, the subscriber entity selects the emulated non-LTE cell as the next option for performing the mobility update procedure. In step 614, the subscriber entity transmits the second mobility update request message to the emulated non-LTE cell. The second mobility update request message may comprise a location update request message of the UMTS or GSM, for example, depending on the technology employed in the non-LTE cell. Upon receiving the location mobility update request message through the emulated non-LTE cell, the apparatus may configure the base station of the emulated non-LTE cell to transmit an identity request message requesting the subscriber entity to send both the IMSI and IMEI (step 616). As a response to the identity request, the subscriber entity follows the specification and sends the IMSI and the IMEI in an identity response message to the apparatus through the emulated non-LTE cell.

Upon receiving the IMSI and the IMEI through the emulated non-LTE cell, the apparatus may be configured compare the IMSI received in step 606 with the IMSI received in step 616 and determine that the IMSIs match. As a consequence, the apparatus may update the note in the IMEI record corresponding to the above-described IMSI from "not applicable" to the IMEI received in step 616. Now, the IMSI-IMEI database comprises an IMSI-IMEI mapping for the LTE subscriber entity.

When the subscriber entity is later detected in any emulated LTE cell of the apparatus, the apparatus may request the IMSI in the above-described manner (steps 604, 606). Upon receiving only the IMSI, the apparatus may employ the IMSI-IMEI mapping stored in block 618 even if the IMEI has not been received through the emulated LTE cell.

In an embodiment, the apparatus may determine whether or not to send the neighbor list in step 608. In some scenarios, the IMSI may be sufficient and there is no need for capturing the IMEI. Accordingly the forced switch to the emulated non-LTE cell may be skipped. The selection of whether or not employing the forced switch to the non-LTE cell may be based on user input through a user interface, e.g. an operator of the apparatus may make the selection.

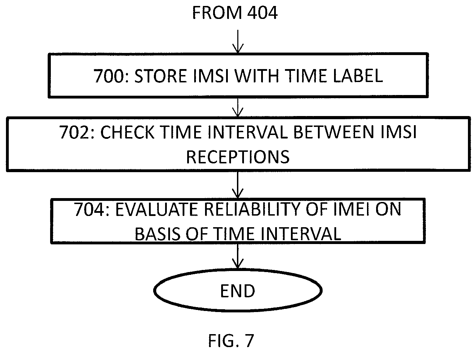

Figure 7 illustrates an embodiment of the procedure of Figure 4 or 6, wherein the apparatus is configured to estimate the reliability of the IMEI on the basis of the time interval between the reception of the IMSI through the emulated LTE cell and the reception of the IMSI-IMEI combination through the emulated non-LTE cell. Referring to Figure 7, when storing the IMSI received in step 404 or 606, the apparatus may store information on reception timing of the IMSI (block 700). In an embodiment, the apparatus may store a time label indicating the reception timing in connection with the IMSI. In another embodiment, the apparatus launches a timer upon receiving the IMSI. Upon receiving the IMSI-IMEI combination in step 410 or 616, the apparatus checks a time interval between the two receptions of the same IMSI in block 702. On the basis of the time interval, the apparatus evaluates the reliability of the IMEI. For example, if the time interval is long, the reliability may be classified as poor. On the other hand, if the time interval is short, the reliability may be classified as good. The longer is the time interval, the more probable is that the user has swapped the mobile device.

In an embodiment, the apparatus employs a discarding threshold in block 704. If the time interval exceeds the discarding threshold, the apparatus discards the received IMSI-IMEI combination as unreliable. The IMSI received in step 404 or 606 may be maintained. On the other hand, if the time interval is shorter than the discarding threshold, the IMEI may be considered as reliable and step 412 or 618 may be carried out. In an embodiment, the discarding threshold is one minute or less than one minute.

In another embodiment, the apparatus stores a reliability metric in connection with storing the IMSI-IMEI combination in step 412/618. The reliability metric may be mapped to the time interval according to a predetermined mapping table. The time interval and the reliability metric may be inversely proportional in the sense that as the time interval increases, the reliability decreases.

The invention is applicable to apparatuses configured to emulate cells of cellular communication systems described above, but other embodiments may employ other wireless communication technologies. As the communication technologies develop, some changes to the described embodiments may be needed. It is obvious to a person skilled in the art that, as the technology advances, the inventive concept can be implemented in various ways. The invention and its embodiments are not limited to the examples described above but may vary within the scope of the claims.

## Claims

1. A method comprising:
controlling (400), by an apparatus (100), at least one base station (112) to establish an emulated long-term evolution, LTE, cell (130) and an emulated non-LTE cell (132);
controlling (402), by the apparatus, the at least one base station to receive a first mobility update request message from a subscriber entity through the emulated LTE cell, wherein the first mobility update request message is a part of an LTE mobility update procedure of the subscriber entity, and wherein the subscriber entity comprises a mobile device having an international mobile equipment identifier, IMEI, and a subscriber identity module, SIM, having an international mobile subscriber identifier, IMSI;
controlling (404), by the apparatus, the base station to receive the IMSI from the subscriber entity as a part of identity verification comprised in the LTE mobility update procedure;
storing (406), by the apparatus, the received IMSI in a database;
controlling (408), by the apparatus, the at least one base station to receive a second mobility update request message from the subscriber entity through the emulated non-LTE cell, wherein the second mobility update request message is a part of a non-LTE mobility update procedure of the subscriber entity;
controlling (410), by the apparatus, the at least one base station to receive the IMSI and the IMEI from the subscriber entity during identity verification comprised in the non-LTE mobility update procedure;
providing (700) the IMSI received through the emulated LTE cell with a time stamp indicating the reception timing of the IMSI received through the emulated LTE cell;
upon receiving the IMSI and the IMEI through the emulated non-LTE cell, evaluating (704) reliability of the IMEI on the basis of the time stamp and reception timing of the IMSI and the IMEI through the emulated non-LTE cell;
wherein said evaluating the reliability of the IMEI comprises omitting storing (412), by the apparatus, on the basis of the IMSI received through the emulated LTE cell and the IMSI and IMEI received through the emulated non-LTE cell, a mapping between the IMSI and the IMEI in the database, if the time interval between the reception of the IMSI through the emulated LTE cell and the reception of the IMSI and IMEI through the emulated non-LTE cell is longer than a determined discarding threshold.

2. The method of claim 1, further comprising:
detecting (500), on the basis of a value of the received IMEI that the mobile device does not support LTE; and
determining (502), on the basis of the detection and the knowledge that the IMSI has been received through the emulated LTE cell that the subscriber entity has switched the mobile device.

3. The method of claim 1 or 2, further comprising after receiving the IMSI through the emulated LTE cell: causing transmission of a mobility update reject (610) message to the subscriber entity in response to the mobility update request message.

4. The method of claim 3, further comprising providing (608) the mobile device with a neighbour cell list comprising the emulated non-LTE cell.

5. The method of claim 4, wherein the neighbour list consists of one or more emulated non-LTE cells.

6. The method of any preceding claim, further comprising controlling the at least one base station to establish a plurality of emulated LTE cells and/or a plurality of emulated non-LTE cells.

7. The method of any preceding claim, wherein the first mobility update request message comprises a non-access stratum tracking area update request message.

8. The method of any preceding claim, further comprising providing the emulated cells with identifiers that are unused by real neighbouring cells.

9. The method of any preceding claim, wherein the emulated non-LTE cell is configured to operate according to Global System for Mobile Communications, GSM, or Universal Mobile Telecommunication System, UMTS, wideband code division multiple access, W-CDMA, standard.

10. An apparatus comprising means for carrying out all the steps of any preceding claim.

11. A computer program product readable by a computer and comprising a computer program code causing, when read by the computer, execution of a computer process comprising all the steps of the method of any preceding claim.

## Patentansprüche

1. Verfahren, das umfasst:
durch eine Vorrichtung (100), Steuern (400) mindestens einer Basisstation (112) zum Aufbauen einer emulierten Long-Term-Evolution, LTE, Zelle (130) und einer emulierten Nicht-LTE-Zelle (132);
durch die Vorrichtung, Steuern (402) der mindestens einen Basisstation zum Empfangen einer ersten Mobilitätsaktualisierungsanforderungsnachricht von einer Teilnehmerinstanz durch die emulierte LTE-Zelle, wobei die erste Mobilitätsaktualisierungsanforderungsnachricht Teil einer LTE-Mobilitätsaktualisierungsprozedur der Teilnehmerinstanz ist und wobei die Teilnehmerinstanz ein mobiles Gerät umfasst, das eine International Mobile Equipment Identifier (internationale Kennung für mobile Geräte), IMEI, und ein Subscriber Identity Module (Teilnehmer-Identifikationsmodul), SIM, aufweist, das eine International Mobile Subscriber Identifier (Internationale Mobilfunk-Teilnehmerkennung), IMSI, aufweist;
durch die Vorrichtung, Steuern (404) der Basisstation zum Empfangen der IMSI von der Teilnehmerinstanz als Teil der Identitätsüberprüfung, die in der LTE-Mobilitätsaktualisierungsprozedur umfasst ist;
durch die Vorrichtung, Speichern (406) der empfangenen IMSI in einer Datenbank;
durch die Vorrichtung, Steuern (408) der mindestens einen Basisstation zum Empfangen einer zweiten Mobilitätsaktualisierungsanforderungsnachricht von der Teilnehmerinstanz durch die emulierte Nicht-LTE-Zelle, wobei die zweite Mobilitätsaktualisierungsanforderungsnachricht ein Teil einer Nicht-LTE-Mobilitätsaktualisierungsprozedur der Teilnehmerinstanz ist;
durch die Vorrichtung, Steuern (410) der mindestens einen Basisstation zum Empfangen der IMSI und der IMEI von der Teilnehmerinstanz während der Identitätsüberprüfung, die in der Nicht-LTE-Mobilitätsaktualisierungsprozedur umfasst ist;
Bereitstellen (700) der durch die emulierte LTE-Zelle empfangenen IMSI mit einem Zeitstempel, der die Empfangszeit der durch die emulierte LTE-Zelle empfangenen IMSI angibt;
beim Empfangen der IMSI und der IMEI durch die emulierte Nicht-LTE-Zelle, Bewerten (704) der Zuverlässigkeit der IMEI basierend auf dem Zeitstempel und der Empfangszeit der IMSI und der IMEI durch die emulierte Nicht-LTE-Zelle;
wobei das Bewerten der Zuverlässigkeit der IMEI durch die Vorrichtung, basierend auf der durch die emulierte LTE-Zelle empfangenen IMSI und der durch die emulierte Nicht-LTE-Zelle empfangenen IMSI und IMEI, das Auslassen des Speicherns (412) eines Mappings zwischen der IMSI und der IMEI in der Datenbank umfasst, wenn das Zeitintervall zwischen dem Empfang der IMSI durch die emulierte LTE-Zelle und dem Empfang der IMSI und IMEI durch die emulierte Nicht-LTE-Zelle länger als ein bestimmter Verwerfungsschwellenwert ist.

2. Verfahren nach Anspruch 1, das ferner umfasst:
basierend auf einem Wert der empfangenen IMEI, Feststellen (500), dass das mobile Gerät LTE nicht unterstützt; und
basierend auf der Feststellung und der Kenntnis, dass die IMSI durch die emulierte LTE-Zelle empfangen wurde, Bestimmen (502), dass die Teilnehmerinstanz das mobile Gerät gewechselt hat.

3. Verfahren nach Anspruch 1 oder 2, das ferner nach dem Empfangen der IMSI durch die emulierte LTE-Zelle umfasst: Bewirken der Übertragung einer Nachricht zur Mobilitätsaktualisierungsablehnung (610) an die Teilnehmerinstanz als Reaktion auf die Mobilitätsaktualisierungsanforderungsnachricht.

4. Verfahren nach Anspruch 3, das ferner das Versehen (608) des mobilen Geräts mit einer Nachbarzellenliste umfasst, die die emulierte Nicht-LTE-Zelle umfasst.

5. Verfahren nach Anspruch 4, wobei die Nachbarliste aus einer oder mehreren emulierten Nicht-LTE-Zellen besteht.

6. Verfahren nach einem der vorhergehenden Ansprüche, das ferner das Steuern der mindestens einen Basisstation zum Aufbauen mehrerer emulierter LTE-Zellen und/oder mehrerer emulierter Nicht-LTE-Zellen umfasst.

7. Verfahren nach einem der vorhergehenden Ansprüche, wobei die erste Mobilitätsaktualisierungsanforderungsnachricht eine Non-Access-Stratum-Tracking-Area-Aktualisierungsanforderungsna chricht umfasst.

8. Verfahren nach einem der vorhergehenden Ansprüche, das ferner das Versehen der emulierten Zellen mit Kennungen umfasst, die durch reale benachbarte Zellen nicht verwendet werden.

9. Verfahren nach einem der vorhergehenden Ansprüche, wobei die emulierte Nicht-LTE-Zelle konfiguriert wird, um gemäß dem Global System for Mobile Communications, GSM, oder Universal Mobile Telecommunication System, UMTS, Wideband Code Division Multiple Access, W-CDMA, Standard betrieben zu werden.

10. Vorrichtung, die Mittel zum Durchführen aller Schritte nach einem der vorhergehenden Ansprüche umfasst.

11. Computerprogrammprodukt, das durch einen Computer lesbar ist und einen Computerprogrammcode umfasst, der, wenn er durch den Computer gelesen wird, die Ausführung eines Computerprozesses bewirkt, der alle Schritte des Verfahrens nach einem der vorhergehenden Ansprüche umfasst.

## Revendications

1. Procédé qui comprend :
la commande (400), par un appareil (100), d'au moins une station de base (112) pour établir une cellule LTE, Emulated Long-Term Evolution, (130) et une cellule non-LTE émulée (132) ;
la commande (402), par l'appareil, de ladite au moins une station de base pour recevoir un premier message de demande de mise à jour de mobilité d'une entité abonnée par l'intermédiaire de la cellule LTE émulée, dans lequel le premier message de demande de mise à jour de mobilité est une partie d'une procédure de mise à jour de mobilité LTE de l'entité abonnée, et dans lequel l'entité abonnée comprend un dispositif mobile qui a un identifiant d'équipement mobile international, IMEI, et un module d'identité d'abonné, SIM, qui a un identifiant d'abonné mobile international, IMSI ;
la commande (404), par l'appareil, de la station de base pour recevoir l'IMSI de l'entité abonnée en tant que partie de vérification d'identité comprise dans la procédure de mise à jour de mobilité LTE ;
la mémorisation (406), par l'appareil, de l'IMSI reçu dans une base de données ;
la commande (408), par l'appareil, de ladite au moins une station de base pour recevoir un deuxième message de demande de mise à jour de mobilité de l'entité abonnée par l'intermédiaire de la cellule non-LTE émulée, dans lequel le deuxième message de demande de mise à jour de mobilité est une partie d'une procédure de mise à jour de mobilité non-LTE de l'entité abonnée ;
la commande (410), par l'appareil, de ladite au moins une station de base pour recevoir l'IMSI et l'IMEI de l'entité abonnée pendant la vérification d'identité comprise dans la procédure de mise à jour de mobilité non-LTE ;
la fourniture (700) de l'IMSI reçu par l'intermédiaire de la cellule LTE émulée avec un horodatage qui indique la synchronisation de réception de l'IMSI reçu par l'intermédiaire de la cellule LTE émulée ;
lors de la réception de l'IMSI et de l'IMEI par l'intermédiaire de la cellule non-LTE émulée, l'évaluation (704) de la fiabilité de l'IMEI sur la base de l'horodatage et de la synchronisation de réception de l'IMSI et de l'IMEI par l'intermédiaire de la cellule non-LTE émulée ;
dans lequel ladite évaluation de la fiabilité de l'IMEI comprend l'omission de la mémorisation (412), par l'appareil, sur la base de l'IMSI reçu par l'intermédiaire de la cellule LTE émulée et de l'IMSI et de l'IMEI reçus par l'intermédiaire de la cellule non-LTE émulée, d'un mappage entre l'IMSI et l'IMEI dans la base de données, si l'intervalle de temps entre la réception de l'IMSI par l'intermédiaire de la cellule LTE émulée et la réception de l'IMSI et de l'IMEI par l'intermédiaire de la cellule non-LTE émulée est plus long qu'un seuil d'abandon déterminé.

2. Procédé selon la revendication 1, qui comprend en outre :
la détection (500), sur la base d'une valeur de l'IMEI reçu, que le dispositif mobile ne prend pas en charge LTE ; et
la détermination (502), sur la base de la détection et de la connaissance que l'IMSI a été reçu par l'intermédiaire de la cellule LTE émulée, que l'entité abonnée a commuté le dispositif mobile.

3. Procédé selon la revendication 1 ou 2, qui comprend en outre, après la réception de l'IMSI par l'intermédiaire de la cellule LTE émulée, la commande de la transmission d'un message de rejet de mise à jour de mobilité (610) à l'entité abonnée en réponse au message de demande de mise à jour de mobilité.

4. Procédé selon la revendication 3, qui comprend en outre la fourniture (608) au dispositif mobile d'une liste de cellules voisines qui comprend la cellule non-LTE émulée.

5. Procédé selon la revendication 4, dans lequel la liste de cellules voisines consiste en une ou plusieurs cellules non-LTE émulées.

6. Procédé selon l'une quelconque des revendications précédentes, qui comprend en outre la commande de ladite au moins une station de base pour établir une pluralité de cellules LTE émulées et/ou une pluralité de cellules non-LTE émulées.

7. Procédé selon l'une quelconque des revendications précédentes, dans lequel le premier message de demande de mise à jour de mobilité comprend un message de demande de mise à jour de zone de suivi de strate de non-accès.

8. Procédé selon l'une quelconque des revendications précédentes, qui comprend en outre la fourniture, aux cellules émulées, des identifiants qui ne sont pas utilisés par des cellules voisines réelles.

9. Procédé selon l'une quelconque des revendications précédentes, dans lequel la cellule non-LTE émulée est configurée pour fonctionner conformément à la norme W-CDMA, Wideband Code Division Multiple Access, du système GSM, Global System for Mobile Communications ou du système UMTS, Universal Mobile Telecommunication System.

10. Appareil qui comprend des moyens pour effectuer toutes les étapes de l'une quelconque des revendications précédentes.

11. Produit-programme d'ordinateur qui peut être lu par un ordinateur et qui comprend un code de programme d'ordinateur qui, lorsqu'il est lu par un ordinateur, provoque l'exécution d'un processus informatique qui comprend toutes les étapes du procédé selon l'une quelconque des revendications précédentes.
